# EUROPEAN PATENT APPLICATION

(11) **EP 1 133 943 A2**
(43) Date of publication of application: **19.09.2001**
(21) Application number: 01101666.4
(22) Date of filing: 29.01.2001
(51) Int. Cl.: A47J 29/00

(54) **Method for producing boiled egg-like foods and apparatus for the same**

(30) Priority: 25.02.2000 JP 2000050144
(71) Applicant: Yamazaki, Osamu, Sapporo-shi, Hokkaido (JP)
(72) Inventor: Yamazaki, Osamu, Sapporo-shi, Hokkaido (JP)
(74) Representative: Klingseisen, Franz, Dipl.-Ing.

(57) **Abstract**

When boiled eggs are made in the home, in general, raw eggs are placed in a pot or the like and heated by boiling water. However, the boiled eggs thus cooked have problems such that the boiled eggs are hardly stored for a long time under natural conditions as well as in a refrigerator, and the uses of boiled eggs are limited.

In the present invention, boiled egg-like foods are produced by heating chicken eggs at a temperature of from 65 to 90°C, and at the same time, irradiating the chicken eggs with far infrared rays having a wavelength of from 3 to 30*µ*m thoroughly.

The boiled egg-like foods thus produced withstand long term storage and can be eaten with good taste, and are useful as foods for the time of emergency.

## Description

### BACKGROUND OF THE INVENTION

### Field of the Invention

The present invention relates to a method for producing boiled egg-like foods utilizing irradiation of far infrared rays and an apparatus for the same.

### Background Information

Chicken eggs have been used as valuable nutrition sources for daily life, and often boiled for eating, for example, used as side dishes of a packed or box lunch for school children's excursion or athletic meet. When boiled eggs are made in the home, in general, raw eggs are placed in a pot or the like and heated by boiling water.

When chicken eggs are boiled for eating, the freshness of the boiled eggs tend to deteriorate rapidly. Accordingly, boiled eggs should be eaten in an early time, but persons sometimes miss the opportunity to eat them and let them rot.

Namely, it is believed that boiled eggs are hardly stored for a long period of time under natural conditions as well as in a refrigerator due to the problem of freshness. If long time has passed before eating or these are stored without taking the environmental temperature into consideration, the rot of boiled eggs is rapidly pronounced and the health will be ruined.

It is believed that eggs boiled by boiling water is low in storability, since miscellaneous bacteria tend to invade through fine pores of eggshells. Particularly, when the boiled eggs are cooled by cold water, the invasion of miscellaneous bacteria is substantial and thus the storability is further lowered.

As mentioned above, chicken eggs are used for various styles and purposes in the field of processed foods, but boiled eggs are limited in uses at the present stage. If long term storage of boiled egg-like processed foods becomes possible, these can be widely used for daily demand as well as nourishing foods at the time of emergency by disasters such as earthquake or flood.

### SUMMARY OF THE INVENTION

The present invention has been accomplished in view of the above problems of the prior art. It is an object of the present invention to provide boiled egg-like foods which can be stored for a long period of time under natural conditions, without generating nasty smell and letting the eggs rot while maintaining the taste of the boiled eggs.

In the present invention, chicken eggs are heated under dry-heating condition at a temperature of from 65 to 90 °C, and at the same time, irradiated with far infrared rays having a wavelength of from 3 to 30 *µ*m thoroughly.

Upon heating, the irradiated far infrared rays reach the depth of the egg, act on the molecules of water of the yolk, and initiate thermal motion, whereby the temperature of the yolk will be raised and coagulation will start. Further, carbon dioxide contained in the white of egg is expanded by heating, and the volume of the egg is increased. At the same time, sulfur-containing amino acid contained in the white is decomposed by heating and hydrogen sulfide is generated. The expanded carbon dioxide comes out of the egg through the pores of the eggshell together with the hydrogen sulfide and the white, and at the last, makes the pores to be hardly invaded by miscellaneous bacteria while coagulating the white. Further, sterilization can also be made by the irradiation of far infrared rays. By conducting these treatments for about 1 to 2 hours, the eggs are processed into boiled egg-like foods.

The boiled egg-like foods withstand the storage at room temperature for from 30 to 50 days.

Further, an apparatus for producing the boiled egg-like foods comprises a case having a space surrounded by metal plates which irradiate far infrared rays and to which heating sources are attached closely, and an egg tray disposed within the case. The apparatus is constructed such that the spherical surface of the egg placed in the egg tray can be irradiated with the far infrared electromagnetic waves uniformly.

### BRIEF DESCRIPTION OF THE DRAWINGS

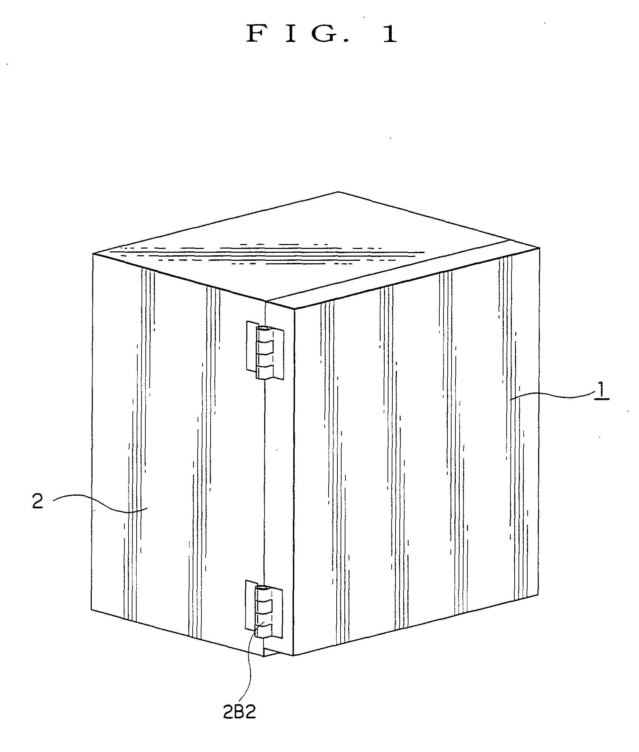

Fig. 1 is a perspective view of the whole apparatus showing an example of the present invention.

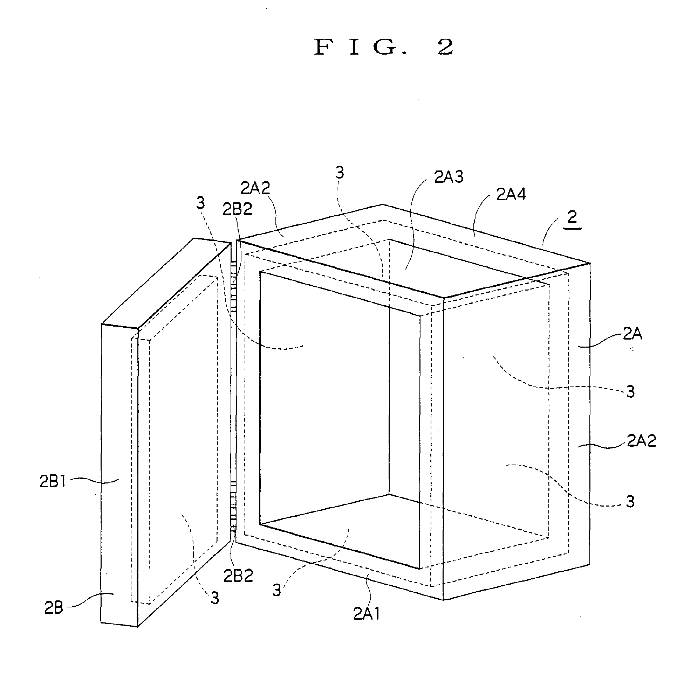

Fig. 2 is a perspective view of the apparatus as shown in Fig. 1 in a state where a door is open and an egg tray is omitted.

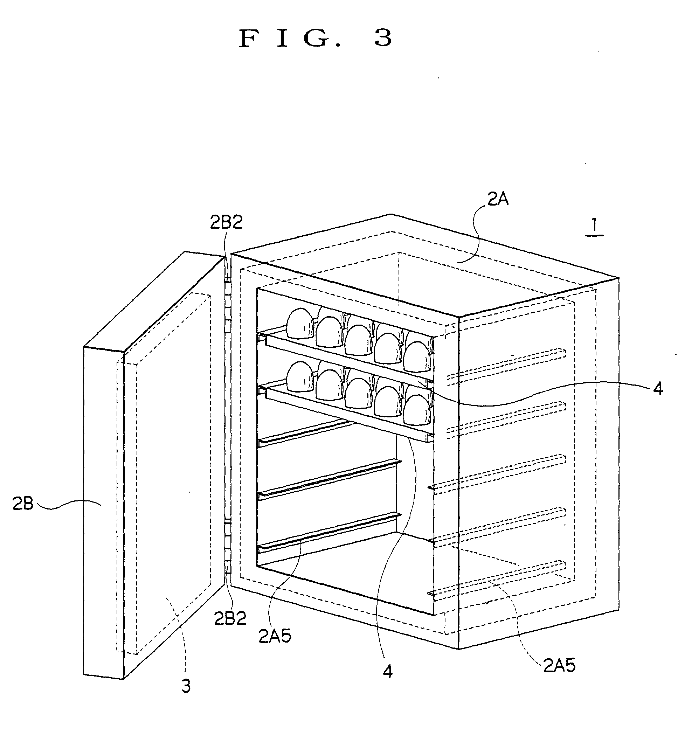

Fig. 3 is a perspective view of the apparatus as shown in Fig. 1 in a state where a door is open.

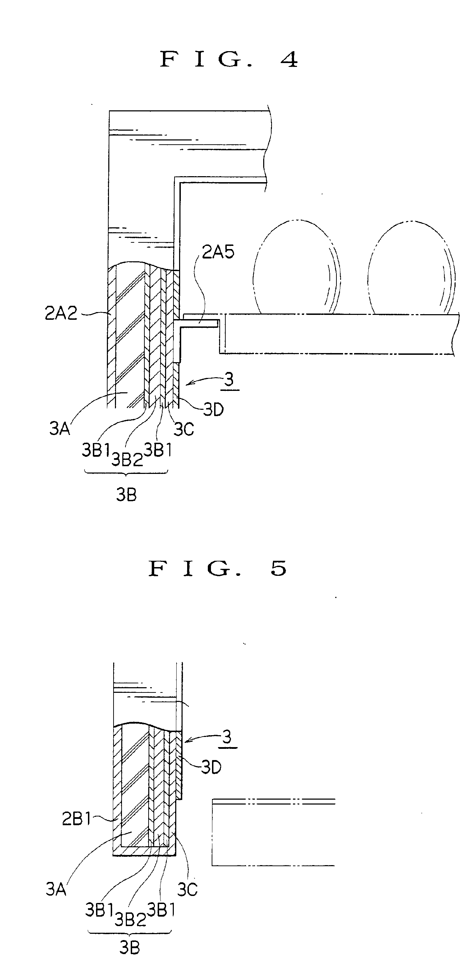

Fig. 4 is an enlarged front view of the apparatus as shown in Fig. 1 in a state where a case body is partially cutaway.

Fig. 5 is an enlarged side view of the apparatus as shown in Fig. 1 in a state where a cover is partially cutaway.

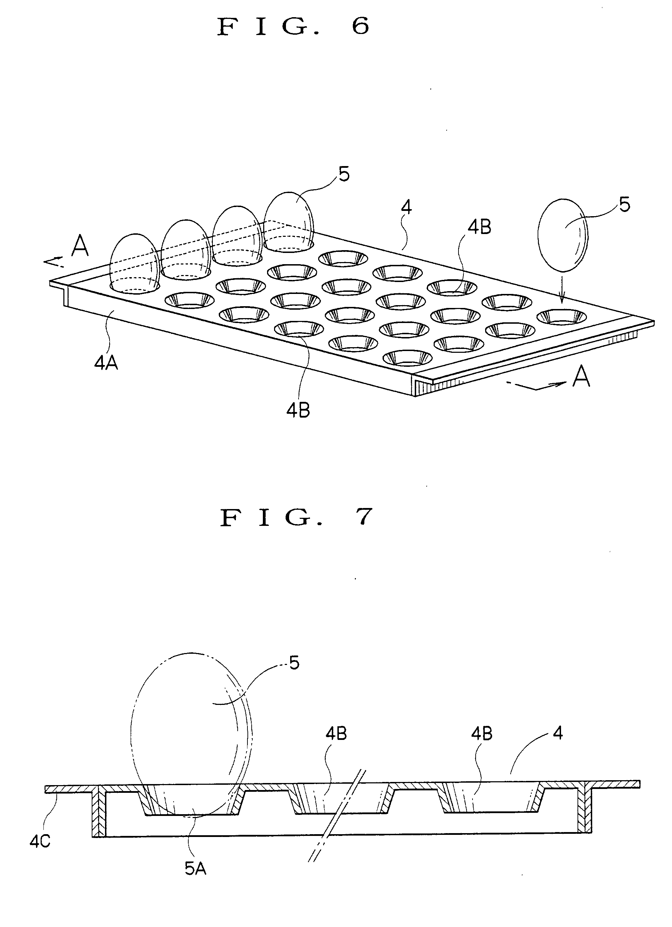

Fig. 6 is a perspective view of an egg tray.

Fig. 7 is an enlarged, partially cutaway and vertical cross-sectional view, taken along the A-A line in Fig. 6.

### DETAILED DESCRIPTION OF PREFERRED EMBODIMENTS

An apparatus for producing the boiled egg-like foods 1 of the present invention comprises a case 2 which is able to control the internal temperature, an internal layered structure 3 and an egg tray 4.

The case 2 comprises a case body 2A and a door 2B. The case body 2A comprises a plane square floor plate 2A1, right and left side walls 2A2, 2A2 which stand in connection with right and left edges of the floor plate, a ceiling plate 2A3 provided between and in connection with the right and left side walls, and a back wall 2A4 provided to line the back of these parts.

An internal layered structure 3 is attached to each inner face of the floor plate 2A1, right and left side walls 2A2, 2A2, ceiling plate 2A3 and back wall 2A4.

On the inner faces of the right and left side walls 2A2, 2A2, right and left flanges 2A5, 2A5 supporting both ends of the egg tray 4 are attached with a predetermined distance from the lower side toward the upper side.

The door 2B comprises a door plate 2B1 provided at the front open section of the case body 2A in a style such that it is capable of opening and closing, by utilizing a hinge 2B2 or the like. On the inner face of the door plate 2B1, an internal layered structure 3 is attached.

The internal layered structure 3 comprises a heat insulating material 3A, a plane heating element 3B, a metal plate 3C and an anodized film 3D which is capable of irradiating far infrared rays, which are sequentially laid from the case body 2A side or from the door plate 2B1 side toward the internal side.

The egg tray 4 is made from a material of a metallic wire netting which is capable of irradiating far infrared rays and is obtainable by applying an anodized layer to a wire netting made of a metal such as aluminum. This egg tray 4 comprises the metallic wire netting 4A in a plane square shape, and plane circular egg-receiving holes 4B, 4B...which are formed on the metallic wire netting with a predetermined distance so that the pointed head portion 5A of a chicken egg 5 can be held therein. This egg tray 4 is supported horizontally by flanges 2A5, 2A5 disposed within the case body 2A.

Chicken eggs 5, 5... are placed in the egg-receiving holes 4B, 4B... and lined with a predetermined distance.

The one as shown in the figures is designed to have engaging frames 4C which also act as reinforcing materials at both sides of the egg tray 4. The engaging frames are attached to and detached from the right and left flanges 2A5, 2A5 of the case.

The inner wall of the case comprises a metal plate 3C; an anodized layer 3D as a far infrared rays-irradiating surface, layered on the inner side of the metal plate 3C; and a plane heating element 3B layered on the outer side of the metal plate 3C. When the plane heating element 3B is charged as a heat source for the far infrared rays-irradiating plate 3C, the egg-heating temperature can be freely controlled by automatically adjusting the voltage in proportional to the change of the platinum resistance of a platinum resistance thermometer disposed in the space of the case. Further, by providing a controller which can freely adjust the heating degree, it is possible to obtain various boiled egg-like foods being different in the degree of boiling.

### Examples

The material of a case body 2A is made of an iron plate. In the internal layered structure 3 provided in the case, heat-resistant insulating coatings 3B1 placed at both sides of a heater 3D2 of the plate heating element 3B, are made from a polyimide heat-resistant indulating film or a similar heat-resistant film.

The plane heating element 3B is easily applied on one surface of the metal plate 3C, and it suppresses the increase of the surface temperature of the metal plate 3C which has an anodized layer 3D as a far infrared rays-irradiating surface, whereby the internal temperature of the case can be maintained appropriately.

Further, the polyimide heat-resistant insulating film can withstand the temperature of as high as 200 °C. However, such a high temperature is not required for the apparatus of the present invention, and delicious boiled egg-like foods can be obtained by a temperature of from 65 to 90°C and irradiation of far infrared electromagnetic waves of from 3 to 30 *µ*m.

It is preferred that the metal plate 3C of the internal layered structure 3 comprises an aluminum plate and on its surface an alloy having a composition of from 0.3 to 4.3 wt% of Manganese (Mn), if necessary from 0.05 to 6.0 wt% of Magnesium (Mg), and Aluminum (Al) as the balance, and having a structure wherein depositions of Al-Mn type intermetallic compound having a particle size of from 0.01 to 0.3 *µ*m are distributed, and that the anodized layer 3D is formed thereon.

When the plane heating element 3B which is closely attached to the iron plate 3C as the inner wall of the case is heated by use of electricity so that the average temperature in the space within the inner walls of the case will become within a range of from 65 to 90 °C, far infrared rays of from 3 to 30*µ*m are irradiated inwardly from the anodized layer 3D provided on the surface of the metal plate 3C. The irradiated far infrared rays are reflected between the inner walls facing each other, for example, the ceiling plate and floor plate and the side walls, and the chicken eggs are thoroughly irradiated with the far infrared rays. Upon heating, coagulation of the white and yolk of eggs is initiated, and the irradiated far infrared rays reach the depth of the chicken eggs, act on the molecules of water of the white, and initiate thermal motion, whereby the temperature will be raised and coagulation of the egg will be accelerated.

From 30 to 40 minutes after the start of heating,the sulfur-containing amino acid in the white is decomposed by heating, the sulfur changes hydrogen sulfide, and carbon dioxide in the white is vaporized and rises the internal pressure of the egg. As a result, the expanded carbon dioxide comes out of the egg through the fine pores of the eggshell together with the hydrogen sulfide and the white, and at the last, the white of egg is coagulated and miscellaneous bacteria can hardly invade through the pores.

By conducting these processes for about 1.5 hours, the chicken eggs are processed into appropriately boiled egg-like foods.

The boiled egg-like foods thus obtained having excellent storability, were subjected to inspection of microorganisms after 3 weeks, and as a result, the number of general living microorganisms was 300 or less, a group of Escherichia coli was negative, staphylococcus aureus was negative, salmonella was negative, and the total judgment of foods was standard or higher. Even when these were left to stand in room for a long period of time of from 30 to 50 days, no odor or rot was observed.

As mentioned above, according to the present invention, it is possible to easily obtain boiled egg-like foods having excellent storability, the apparatus for producing them can easily be operated, its fabrication is easy since the number of parts is small, and the production can be made economically at low costs.

## Claims

1. A method for producing boiled egg-like foods, comprising heating eggs at a temperature of from 65 to 90°C, and at the same time, irradiating the eggs with far infrared rays having a wavelength of from 3 to 30 *µ*m thoroughly.

2. The method according to Claim 1, wherein the heating and the irradiation with far infrared rays are carried out for from 1 to 2 hours.

3. An apparatus for producing boiled egg-like foods, comprising a heating means for heating eggs at a temperature of from 65 to 90°C, and a far infrared rays-irradiating means for irradiating the eggs with far infrared rays having a wavelength of from 3 to 30 *µ*m thoroughly.

4. The apparatus for producing boiled egg-like foods accordng to Claim 3. wherein the apparatus comprises a case having metal plates each to which a heating source is closely attached and each of which irradiates far infrared electromagnetic waves, and a space surrounded by the metal plates; and an egg tray disposed in the case which holds a lot of eggs therein, wherein the heating and the irradiation of far infrared rays are carried out uniformly over the spherical surfaces of the eggs held in the egg tray.

5. An apparatus for producing boiled egg-like foods, which comprises a case, an internal layered structure which conducts heating and irradiates far infrared electromagnetic waves, and an egg tray, wherein
the case comprises a case body and a door,
the internal layered structure is attached to the inner faces of the cse body and the door, and
the egg tray is formed into a plane square shape which can be horizontally attached to and detached from the case body, and has egg-receiving holes in which eggs are held.

6. The apparatus for producing boiled egg-like foods according to Claim 5, wherein the internal layered structure comprises an insulating material, a plane heating element, a metal plate and an anodized layer which is capable of irradiating far infrared rays, which are laminated sequentially from the case side toward the inner side, and
the egg tray is made from a material of a metallic wire netting on which an anodized layer capable of irradiating far infrared rays is applied, and has egg receiving holes provided in the metallic wire netting with a predetermined distance wherein eggs are held therein.

7. An apparatus for producing boiled egg-like foods, which comprises a case, an internal layered structure which conducts heating and irradiates far infrared electromagnetic waves, and an egg tray, wherein
the case body comprises a plane square floor plate, right and left side walls which stand in connection with right and left edges of the floor plate, a ceiling plate provided between and in connection with the right and left side walls, and a back wall provided at the back of these parts,
an internal layered structure is attached to each inner face of the floor plate, right and left side walls, ceiling plate and back wall,
on the inner faces of the right and left side walls, right and left receivers detachably supporting both sides of the egg tray are attached with a predetermined distance from the lower side toward the upper side,
the door comprises a door plate provided at the front open section of the case body in a style such that it is capable of opening and closing, wherein an internal layered structure is attached on the inner face of the door plate,
the internal layered structure comprises a heat insulating material, a plane heating element, a metal plate and an anodized layer which is capable of irradiating far infrared rays, which are sequentially laid from the case body side or from the door plate side toward the inner side, and
the egg tray is made from a material of a metallic wire netting which is obtainable by applying an anodized layer, which is capable of irradiating far infrared rays, to a wire netting; and the egg tray comprises a metallic wire netting formed in a plane square shape so that the wire netting can be horizontally attached and detached in the case body, and plane circular egg-receiving holes which are formed on the metallic wire netting with a predetermined distance so that the pointed head portion of an egg can be held therein.

8. The apparatus for producing boiled egg-like foods according to Claim 5, wherein the apparatus further comprises a temperature sensor and a controller which is capable of adjusting the heating degree of the internal layered structure in the case.
